(19) Europäisches Patentamt
European Patent Office
Office européen des brevets

(11) Veröffentlichungsnummer: **0 197 006 B1**

(12) **EUROPÄISCHE PATENTSCHRIFT**

(45) Veröffentlichungstag der Patentschrift: **11.12.91**

(51) Int. Cl.⁵: **D06P 1/00**, C09B 67/54, C09B 67/44, C09B 67/24, B01D 61/14

(21) Anmeldenummer: **86810136.1**

(22) Anmeldetag: **21.03.86**

# (54) Verfahren zur Herstellung von Präparaten wasserlöslicher organischer Farbstoffe.

(30) Priorität: **29.03.85 CH 1371/85**

(43) Veröffentlichungstag der Anmeldung: **08.10.86 Patentblatt 86/41**

(45) Bekanntmachung des Hinweises auf die Patenterteilung: **11.12.91 Patentblatt 91/50**

(84) Benannte Vertragsstaaten: **BE CH DE FR GB IT LI**

(56) Entgegenhaltungen:
**EP-A- 0 114 031**
**FR-A- 2 124 359**
**FR-A- 2 416 926**

(73) Patentinhaber: **CIBA-GEIGY AG**
**Klybeckstrasse 141**
**CH-4002 Basel(CH)**

(72) Erfinder: **Förtsch, Bruno, Dr.**
**Eggweg**
**CH-4433 Ramlinsburg(CH)**
Erfinder: **Rabassa, Alberto**
**Im Goldbrunnen 20**
**CH-4104 Oberwil(CH)**
Erfinder: **Bruttel, Beat, Dr.**
**Ob den Reben 5**
**CH-4461 Böckten(CH)**

EP 0 197 006 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Präparaten wasserlöslicher organischer Farbstoffe, die nach dem Verfahren hergestellten Präparate, sowie deren Verwendung zum Färben und Bedrucken von natürlichem oder synthetischem Fasermaterial.

Wasserlösliche organische Farbstoffe fallen am Ende der Synthese im allgemeinen in Form verdünnter wässriger Lösungen an, die durch Nebenprodukte verunreinigt sind und zudem, in Abhängigkeit von der Synthese, noch anorganische Salze, z.B. Alkalimetallchloride oder -sulfate, enthalten. Um von derartigen Rohlösungen verkaufsfertige Präparate herzustellen, müssen diese aufkonzentriert und möglichst weitgehend von Salzen und Nebenprodukten befreit werden. Ein hoher Salzgehalt wirkt sich vor allem negativ auf die Haltbarkeit von Flüssigformulierungen aus, während Nebenprodukte, die oftmals auch eine Eigenfarbe besitzen, zu einer Verschiebung des Farbtons führen können.

Mit der Entwicklung membrangebundener Filtriertechniken beginnt man in letzter Zeit in zunehmendem Masse Farbstofflösungen auf diese einfache und doch wirkungsvolle Art und Weise zu entsalzen und von Nebenprodukten zu befreien und schliesslich durch teilweisen Wasserentzug auf den erforderlichen Farbstoffgehalt einzustellen. Ein solches durch einen Membrantrennschritt gekennzeichnetes Verfahren ist z.B. aus der FR-A-2 124 359 bekannt.

Bei derartigen Trennoperationen wird jedoch oft eine Verstopfung der Membran beobachtet, die zu unrentabel hohen Filtrationszeiten führt oder einen nur ungenügenden Entsalzungsgrad zur Folge hat. Um hier zu besseren Ergebnissen zu gelangen werden Membrantrennverfahren, wie beispielsweise die Hyperfiltration, unter Verwendung von sogenannten modifizierten Membranen vorgeschlagen (z.B. EP-A-00 37 382). Dies sind Membranen, die an ihrer Oberfläche z.B. ionische Gruppen tragen, die durch elektrostatische Abstossung ein Eindringen des anionischen oder kationischen Farbstoffs in die feinen Membrankanäle verhindern sollen. Aber auch mit solchen Membranen lassen sich nicht immer befriedigende Filtrationszeiten erreichen.

Aufgabe der vorliegenden Erfindung ist es, die bestehenden Trennverfahren zu verbessern. Angestrebt wird vor allem eine hohe Durchflussrate, eine Verringerung der Verstopfungsanfälligkeit und generell eine hohe Betriebssicherheit.

Es wurde nun gefunden, dass sich die Nachteile bisheriger Membrantrennverfahren in einfacher Weise durch das nachfolgend beschriebene Verfahren umgehen lassen.

Gegenstand der vorliegenden Erfindung ist deshalb ein Verfahren zur Herstellung von Präparaten wasserlöslicher organischer Farbstoffe ausgehend von einer wässrigen salzhaltigen Suspension des Rohfarbstoffs und unter Anwendung von Membrantrennverfahren, dadurch gekennzeichnet, dass man die wässrige Suspension des Rohfarbstoffs durch eine Fein- oder Mikrofiltration oder eine Ultrafiltration als erstem Membrantrennverfahren weitgehend von Nebenprodukten befreit und deren Salzgehalt um mehr als die Hälfte verringert, anschliessend die Farbstoffsuspension gegebenenfalls mit Wasser verdünnt und durch eine Hyperfiltration oder eine mehrstufige Ultrafiltration unter Verwendung von Membranen mit fallenden Trennschnitten als zweitem Membrantrennverfahren entsalzt und aufkonzentriert und dann in eine flüssige oder feste Handelsform überführt.

Wesentliches Merkmal dieser Verfahrensweise ist, dass der durch Salze und Nebenprodukte verunreinigte Farbstoff als Suspension in einer ersten Reinigungsstufe von der Hauptsalzlast befreit, dann gegebenenfalls verdünnt und mit Hilfe eines zweiten Membrantrennverfahrens weiter entsalzt und aufkonzentriert wird.

Durch diese mehrstufige Verfahrensweise kommt es insbesondere in der zweiten Trennstufe zu deutlich weniger Betriebsstörungen wegen Membranverstopfung, stattdessen erreicht man höhere Durchflusswerte und kommt mit einer geringeren Membranfläche aus.

Als wasserlösliche organische Farbstoffe kommen beispielsweise saure (Colour Index (C.I.) acid and direct dyes) und basische (C.I. basic dyes), wie Metallkomplex-, Chromierungs-, Entwicklungs- und Beizenfarbstoffe sowie vor allem Reaktivfarbstoffe in Frage. Es handelt sich insbesondere um sulfonsäure- bzw. carbonsäuregruppenhaltige metallfreie oder metallhaltige und metallisierbare Mono-, Dis- und Polyazofarbstoffe, Pyrazolon-, Thioxanthron-, Oxazin-, Stilben-, Formazanfarbstoffe, Anthrachinon-, Nitro-, Methin-, Triphenylmethan-, Xanthon-, Naphthazarin-, Styryl-, Azastyryl-, Naphthoperinon-, Chinophthalon-und Phthalocyaninfarbstoffe, sowie vorzugsweise um solche Farbstoffe, die mindestens einen faserreaktiven Rest im Farbstoffmolekül aufweisen.

Bei den gemäss vorliegendem Verfahren in erster Linie zu Farbstoffformulierungen verarbeiteten wasserlöslichen anionischen Farbstoffen handelt es sich insbesondere um die Alkalisalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono-und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylamino-anthrachinon-2-sulfonsäuren und als Phthalocyaninfarbstoffe besonders sulfierte Kupferphthalocyanine oder Phthalocyaninarylamide zu erwähnen.

Als wasserlösliche Metallkomplexfarbstoffe kommen sulfonsäure- bzw. carbonsäuregruppenhaltige Metallkomplexfarbstoffe, beispielsweise 1:1 oder 1:2 Metallkomplexe von Azo- oder Azomethinfarbstoffen oder metallisierte Phthalocyanine, insbesondere Kupfer- und Nickelphthalocyanine, in Betracht. Bei den 1:1 und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy-, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Gruppierungen unsubstituiert oder auch substituiert sein können. Als Substituenten kommen z.B. in Betracht: gegebenenfalls substituierte Sulfonsäureamide oder Sulfone, Halogen oder Nitro.

Die Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-$\beta$- oder -$\gamma$-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Ethyl, Propyl, Butyl, oder niedere Hydroxyalkylgruppen, wie 2-Hydroxyethyl, 2-Hydroxypropyl, 3-Hydroxypropyl.

Beim vorliegenden Verfahren verwendet man die sulfonsäuregruppenhaltigen Azofarbstoffe vorteilhaft in Form ihrer Metallsalze, z.B. der Kalium- oder vor allem Natriumsalze.

Als geeignete faserreaktive Gruppen enthalten die Reaktivfarbstoffe z.B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-Chlorbenzthiazolyl-, Chloracetylaminogruppen oder $\alpha,\beta$-Dimbrompropionylaminogruppen.

Desweiteren kommen als faserreaktive Gruppen z.B. noch in Frage: Halogencyclobutan-, Mono- oder Bis-($\gamma$-Halogen-$\beta$-hydroxypropyl)-aminogruppen, $\beta$-Halogenethylsulfamidreste, $\beta$-Halogenethoxygruppen, $\beta$-Halogenethylmercaptogruppen, $\gamma$-Halogen-$\beta$-hydroxy-propylsulfamidreste oder 2,3-Epoxypropylgruppen.

Bei den wasserlöslichen basischen Farbstoffen handelt es sich um die gebräuchlichen Salze und Metallhalogenid-, beispielsweise Zinkchlorid-Doppelsalze der bekannten kationischen Farbstoffe, insbesondere der Methin- bzw. Azamethinfarbstoffe, die z.B. einen Indolinium-, Pyrazolium-, Imidazolium-, Triazolium-, Tetrazolium-, Oxadiazolium-, Thiodiazolium-, Oxazolium-, Thiazolium-, Pyridinium-, Pyrimidinium-, Pyrazinium-Ring enthalten.

Die genannten Heterocyclen können gegebenenfalls substituiert und/oder durch aromatische Ringe anelliert sein. Ferner kommen auch kationische Farbstoffe der Diphenylmethan-, Triphenylmethan-, Oxazin-, Thiazin- und 1,2-Pyran-Reihe in Frage, sowie schliesslich auch Farbsalze der Arylazo- und Anthrachinonreihe.

Die Farbstoffe können gegebenenfalls auch in Mischungen miteinander oder gegebenenfalls mit Farbstoffen eines anderen Typs vorliegen.

Unter dem Begriff wasserlösliche organische Farbstoffe sollen im vorliegenden auch wasserlösliche optische Aufheller verstanden werden und zwar in erster Linie Stilbenaufheller, vor allem solche vom Typ der Bistriazinylaminostilben-disulfonsäuren, der Bis-styrylbiphenyle und -benzole under der Bistriazolylstilben-disulfonsäuren. Dabei liegen die sulfogruppenhaltigen Aufheller vorzugsweise in Form ihrer Metallsalze vor, wie sie bei der Synthese anfallen, z.B. Lithium-, Kalium-, Magnesium- oder vor allem Natriumsalze sowie Ammonium-, Amin- oder Alkanolaminsalze.

Bevorzugt werden mit Hilfe des erfindungsgemässen Verfahrens sulfogruppenhaltige Stilbenaufheller der folgenden Formel zu festen oder flüssigen Handelsformen verarbeitet:

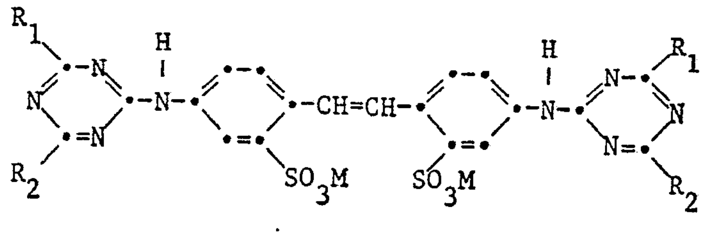

worin

M Wasserstoff, ein Alkalimetall-, Erdalkalimetall-, Ammonium- oder Aminsalzion, $R_1$ und $R_2$ unabhängig voneinander $NH_2$, $NH-CH_3$, $NH-C_2H_5$,$N(CH_3)_2$. $N(C_2H_5)_2$, $NH-CH_2-CH_2OH$, $NH-CH_2-CH_2-CH_2-OH$, $N(CH_2-CH_2-OH)_2$, $N(CH_2-CH_2-CH_2OH)_2$, $N(CH_3)(CH_2-CH_2-OH)$, $NH-CH_2-CH_2-O-CH_2-CH_2-OH$, $NH-CH_2-CH_2-CH_2-SO_3M$, OH, $OCH_3$, $OCH(CH_3)_2$, $O-CH_2-CH_2-O-CH_3$,

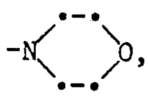 , $-SCH_3$

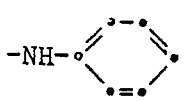 , 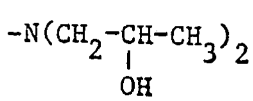 , 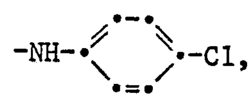 , 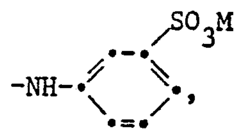 ,

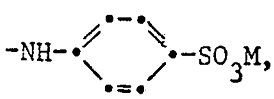 , 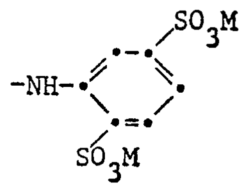 oder 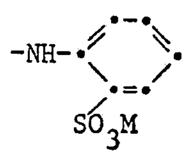

bedeuten, worin M Wasserstoff, ein Alkalimetall-, Erdalkalimetall-, Ammonium- oder Aminsalzion bedeutet; oder der Formel

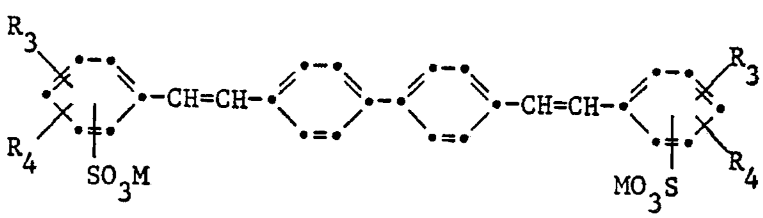 ,

worin

$R_3$ Wasserstoff, Alkyl mit 1 bis 4 Kohlenstoffatomen, Alkoxy mit 1 bis 4 Kohlenstoffatomen, Halogen oder $SO_3M$,

$R_4$ Wasserstoff oder Alkyl mit 1 bis 4 Kohlenstoffatomen und

M Wasserstoff, ein Alkalimetall-, Erdalkalimetall-, Ammonium- oder Aminsalzion bedeuten;

ferner der Formel

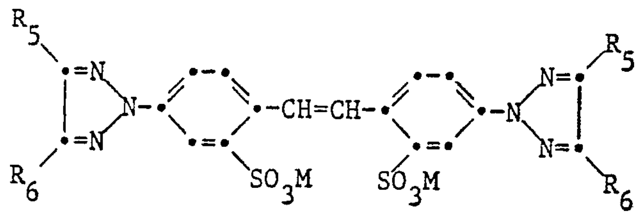

,

worin
M Wasserstoff, ein Alkalimetall-, Erdalkalimetall-, Ammonium- oder Aminsalzion und
$R_5$ und $R_6$ unabhängig voneinander Wasserstoff, $CH_3$,

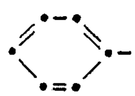 , 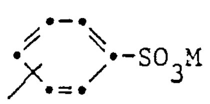 oder $R_5$ und $R_6$ zusammen die Ergänzung zu einem Benzolring bedeuten.

Diese Farbstoffe bzw. optischen Aufheller werden nach bekannten kontinuierlich oder diskontinuierlich arbeitenden Verfahren hergestellt und fallen am Ende der Synthese, je nach Verfahrensführung und Löslichkeitseigenschaften, in Form einer Syntheselösung oder Synthesesuspension an. Handelt es sich um eine Suspension, so kann diese direkt nach vorliegendem Verfahren gereinigt und entsalzt und in die gewünschte Handelsform übergeführt werden. Fällt der Farbstoff hingegen in Form einer Rohlösung an, so wird dieser zunächst z.B. durch Zugabe von Salz oder Ansäuern ausgefällt und dann der ersten Membrantrennung unterworfen. Zuvor kann die Teilchengrösse der Farbstoffsuspension mit Hilfe der Nassmahlung, gegebenenfalls unter Zusatz oberflächenaktiver Mittel, auf einen gewünschten Wert eingestellt werden. Es versteht sich von selbst, dass man je nach Mahldauer auch Dispersionen erhalten kann; im vorliegenden Fall soll daher unter dem Begriff Farbstoffsuspension auch eine Dispersion verstanden werden.

Natürlich können mittels vorliegendem Verfahren nicht nur Synthesesuspensionen zu verkaufsfertigen Farbstoffformulierungen verarbeitet werden, sondern man kann beispielsweise auch von Rohfarbstoffen in Form des wasserfeuchten Presskuchens oder auch von Farbstoffpulvern ausgehen. Der Farbstoffpresskuchen oder das Farbstoffpulver werden zunächst in Wasser angeschlämmt bzw. suspendiert, gegebenenfalls gemahlen und dann dem ersten Membrantrennverfahren zugeführt.

Als Membrantrennverfahren gelangen im erfindungsgemässen Verfahren vor allem die folgenden membrangebundenen Filtrationsverfahren zur Anwendung:

- Feinfiltration oder Mikrofiltration unter Verwendung von Porenmembranen mit einem Porendurchmesser von 0,2 bis 40 µm
- Ultrafiltration unter Verwendung feinporiger Membranen mit einem Porendurchmesser von 10 Å bis 1 µm
- Hyperfiltration über Ionenaustauscher- oder Lösungsdiffusions-Membranen mit einem Porendurchmesser von < 20 Å
- Elektrodialyse durch Anlegen einer elektrischen Spannung und unter Anwendung von Ionenaustauschermembranen als Diaphragma
- Dialyse über ein Konzentrationsgefälle an ionen-selektiven Membranen.

Zur Theorie und Anwendung von Membrantrennprozessen siehe z.B. H. Strathmann; Chemi-Technik 7, 333 (1978) oder W. Pusch, A. Walch; Angew. Chem. 94, 670 (1982).

Da der Farbstoff zunächst in suspendierter Form vorliegt, werden als erstes Membrantrennverfahren zweckmässigerweise solche Filtertechniken eingesetzt, die mit relativ grossporigen Membranen arbeiten, und so eine rasche Abtrennung der Hauptsalzmenge und eine wirkungsvolle Vorreinigung ermöglichen.

Beim ersten membrangebundenen Filtrationsverfahren handelt es sich demnach vor allem um die Feinfiltration, die Mikrofiltration oder die Ultrafiltration.

Als Membranen für die Ultrafiltration kommen sowohl solche aus organischem, als auch anorganischem Material in Frage. Organische Membranmaterialien sind z.B. Polyvinylidenfluorid, Celluloseacetat, Polytetrafluorethylen, Polyacrylnitril, Polyethylenimin, Copolymerisate aus Polyacrylnitril und Vinylpyrrolidon, Polysulfon, Polyamid oder auch hydrophilierte Polyolefine, z.B. auf Basis von Polypropylen. Chemisch modifizierte Polyacrylnitrilmembranen (z.B. EP-A-25 973), die z.B. erhalten werden durch Umsetzung des Basispolymers mit Hydroxylamin, einer polyfunktionellen niedermolekularen Verbindung, einem reaktive Gruppen enthaltenden Polymer und einer ionischen Verbindung, die mit dem Polymer eine chemische Bindung eingehen kann, und anschliessend mit Aktivchlor, z.B. einer Hypochloritlösung behandelt werden, sind ebenfalls als Ultra- bzw. Diafiltrationsmembranen geeignet. Anorganische Membranen sind z.B. solche aus porösem Metall bzw. Metallegierungen (sog. Metallsintermembranen z.B. aus porösem Stahl) oder solche aus porösem Kohlenstoff, dessen Oberfläche z.B. mit einer dünnen Schicht aus Zirkonoxid, Silicium- oder Aluminiumoxid belegt sein kann oder aus porösem Glas oder Keramik. Organische wie anorganische Membranen werden zweckmässigerweise in Rohrform verwendet, wovei die Röhren in einem Rohrmembranmodul zusammengefasst werden. Bevorzugt zum Einsatz gelangen beispielsweise die folgenden Membranen (die eingeklammerten Zahlen geben den Trennschnitt oder cut-off level an) : Polyacrylnitrilmembran (~100.000), Celluloseacetatmembran (~5.000 oder ~20.000), Polysulfonmembran (~10.000), Zirkonoxidmembran (~20.000 oder ~40.000).

Die Membranen können natürlich je nach Membrantrennvorrichtung nicht nur in Form von Rohren vorliegen, sondern auch als Platten, Schlauch oder Hohlfaser ausgebildet sein.

Die Ultrafiltration kann sowohl unter Druck, als auch durch Anlegen eines Vakuums betrieben werden. Ferner kann auf seiten der Farbstoffsuspension unter Druck gearbeitet und permeatseitig gleichzeitig ein Vakuum angelegt werden. Gearbeitet wird allgemein mit einem Druck von 0,5 bis 10 bar oder einem Vakuum von 200 bis 20 mbar. Vorteilhaft führt man die Ultrafiltration durch Anlegen eines Vakuums durch, da ein Unterdruck permeatseitig einer Verstopfung der Membran entgegenwirkt und den Membranflux deutlich steigert.

Als Membranmaterial verwendet man bei der Ultrafiltration insbesondere die chemisch beständigen Zirkonoxidmembranen mit einem Trennschnitt im Bereich von 5.000 bis 500.000.

Da die Farbstoffpartikel im allgemeinen in Form grösserer Aggregate vorliegen, kann anstelle der Ultrafiltration zweckmässigerweise auch eine Fein- oder Mikrofiltration durchgeführt werden, die aufgrund der hohen Durchflussgeschwindigkeit ein rasches Abtrennen der Hauptsalzmenge und niedermolekularer Nebenprodukte von der Synthesedispersion ermöglicht. Eingesetzt werden hierzu vor allem Metallfilter, z.B. aus Edelstahl mit einem Porendurchmesser von 0,2 bis 40 µm, insbesondere 0,2 bis 10 µm, oder poröse Polypropylenmembranen mit einem Porendurchmesser von 0,2 bis 1 µm.

Um eine Auflösung des Farbstoffs während der Ultra- bzw. Feinfiltration möglichst weitgehend zu verhindern, erweist es sich als zweckmässig, bei gut wasserlöslichen Farbstoffen das abgetrennte Permeat nicht durch Wasser, sondern eine verdünnte Salzlösung zu ersetzen und auf diese Weise Nebenprodukte aus der Farbstoffsuspension herauszuwaschen, ohne dass es dabei zu einem nennenswerten Farbstoffverlust kommt.

An dieses erste Membrantrennverfahren, das dazu dient, die wässrige Suspension des Rohfarbstoffs weitgehend von Nebenprodukten zu befreien und den Salzgehalt auf die Hälfte und weniger zu reduzieren, schliesst sich erfindungsgemäss ein weiteres Membrantrennverfahren an.

Die Farbstoffzubereitungen, die in diesem zweiten Membrantrennverfahren behandelt werden, können z.B. durch weitere Verfahrensmassnahmen auf dieses zweite Verfahren vorbereitet werden, beispielsweise durch Verdünnen mit Wasser und durch einen Filtrationsschritt zur Abtrennung von unlöslichen Anteilen, wobei als Filtration auch eine Ultrafiltration infrage kommt.

Auch im Anschluss an das zweite Membrantrennverfahren sind weitere Verfahrensschritte zur Reinigung (Entsalzung) und Konzentrierung, auch unter Verwendung von Membranen, möglich.

Bevor also die vorgereinigte Farbstoffsuspension (Konzentrat des ersten Membrantrennverfahrens) dieser zweiten Membrantrennung unterworfen wird, ist es von Vorteil, diese durch Zugabe von Wasser zunächst zu verdünnen. Hat die Suspension vor dem ersten Membrantrennverfahren einen Farbstoffgehalt von üblicherweise 2 bis 20 Gew.%, so liegt dieser nach der ersten Trennstufe bei ca. 10 bis 30 Gew.% und wird anschliessend durch Verdünnen wieder auf 5 bis 20 Gew.% gesenkt. Dabei ist es hier durchaus erwünscht, dass der Farbstoff in Lösung geht. Je nach Wasserlöslichkeit des Farbstoffs verdünnt man in der Regel mit der 1- bis 3-fachen Menge an Wasser. Die verdünnte Suspension wird zweckmässigerweise kräftig durchmischt und gegebenenfalls erwärmt. Zur Durchmischung verwendet man vorteilhaft einen Dispergier-Hochleistungsrührer, Ultraschall, oder arbeitet in einer mit Strömungsbrechern ausgerüsteten Mischkammer, vorzugsweise nach dem Durchlaufprinzip.

Das zweite Membrantrennverfahren besteht in erster Linie aus einer Hyperfiltration. Hierbei handelt es sich un eine Molekulartrennmethode, die unter Verwendung semipermeabler Membranen mit einem Trennschnitt im Molekulargewichtsbereich von 300 bis 1.000, vorzugsweise 400 bis 800, durchgeführt wird. Derartige Membranen lassen Wasser und aufgelöste Stoffe, die aufgrund ihres Molekulargewichts unterhalb

der Trenngrenze liegen, bei geringem bis mittlerem Druck durchtreten. Allgemein werden Drucke von 10 bis 100 bar und vorzugsweise 10 bis 30 bar verwendet.

Die im erfindungsgemässen Verfahren aufgrund ihrer guten Trenneigenschaften bevorzugt verwendeten Membranen bestehen aus einem polymeren organischen Material, das vorwiegend an der Oberfläche durch saure oder basische Gruppen modifiziert ist.

Bei dem polymeren Membranmaterial handelt es sich um natürliche, halbsynthetische oder synthetische Materialien, die als reaktionsfähige Gruppen beispielsweise Hydroxy-, Amino- und/oder Amidoximgruppen enthalten. Derartige Materialien können mit geeigneten Reagenzien umgesetzt werden, die einerseits saure oder basische Gruppen und anderseits mindestens eine unter Bildung einer chemischen (kovalenten) Bindung reaktionsfähige Gruppierung enthalten.

Bei den sauren Gruppen handelt es sich in erster Linie um Carboxylund Sulfongruppen und bei den basischen Gruppen um primäre, sekundäre oder tertiäre Aminogruppen, ferner Phosphonium- oder Sulfoniumgruppen.

Beispielweise können folgende Polymere in der angegebenen Weise modifiziert werden:

- Celluloseacetate, z.B. solche mit niedrigem Acetylgruppengehalt, aber auch höher acylierte Cellulose, z.B. sogenanntes Zweieinhalbacetat, oder
- Polyvinylalkohole, oder
- Polyacrylnitril und Copolymere aus Acrylnitril und anderen ethylenisch ungesättigten Monomeren.

Als reaktive Reagenzien, die eine saure oder basische Gruppe enthalten, kommen farblose und farbige Verbindungen in Betracht, vor allem saure Reaktivfarbstoffe, die verschiedenen Klassen angehören können, wie Anthrachinon-, Azo- und Formazanfarbstoffe. Sie können gegebenenfalls auch als Metallkomplexe vorliegen.

Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten. Derartige Membranen sind z.B. in DE-A-25 05 254, EP-A-25 973, EP-A-26 399 und EP-A-47 953 beschrieben.

Die im erfindungsgemässen Verfahren verwendeten Membranen weisen vorzugsweise einen Porendurchmesser von 0,1 bis 50 nm auf.

Weitere geeignete Membranen, mit denen ebenfalls ein guter Entsalzungseffekt erzielt wird, sind z.B. solche auf Basis von gegebenenfalls modifizierten Polysulfonen (EP-A-61 424), Polyamiden oder Polystyrol (EP-A-82 355).

Insbesondere verwendet man jedoch anionisch modifizierte Polyacrylnitril-, Polysulfon- oder Celluloseacetat-Membranen mit einem Trennschnitt von 400 bis 800.

Allgemein hat die Farbstofflösung vor dem Membrantrennverfahren, wie bereits erwähnt, einen Farbstoffgehalt von 5 bis 20 Gew.% und die Aufkonzentrierung wird so lange durchgeführt, bis der Farbstoffgehalt auf einen Wert von 15 bis 50 Gew.% gestiegen ist. Gleichzeitig sinkt der Salzgehalt auf Werte unter 5 Gew.%, vorzugsweise unter 2 Gew.%. Um diesen niedrigen Endsalzgehalt zu erreichen, wird man üblicherweise zu Beginn der Hyperfiltration das salzhaltige Filtrat ganz oder teilweise, kontinuierlich oder diskontinuierlich durch Wasser, vorteilhaft demineralisiertes Wasser, ersetzen. Auf diese Weise werden Salze und niedermolekulare Nebenprodukte aus der Farbstofflösung herausgewaschen, wobei deren Farbstoffgehalt zunächst mehr oder weniger konstant bleibt. Je nach Grad der Aufkonzentrierung, bzw. Löslichkeit des Farbstoffs, erhält man am Ende der Hyperfiltration eine Farbstofflösung oder eine Farbstoffsuspension mit einem mehr oder weniger hohen Anteil an ungelöstem Farbstoff, die anschliessend der Standardisierung zugeführt wird.

Wird die vorgereinigte Farbstoffsuspension vor Durchführen der Hyperfiltration so weit verdünnt, dass eine Lösung entsteht, so erweist es sich als zweckmässig, diese vor der Hyperfiltration durch Zwischenschalten eines weiteren membrangebundenen Filtrationsverfahrens von gegebenenfalls vorhandenen ungelösten Anteilen zu befreien. Bei den Nebenprodukten handelt es sich z.T. um wasserunlösliche oder nur schlecht wasserlösliche Verbindungen, die nach Auflösen des Farbstoffs in feindispergierter Form in der Farbstofflösung vorliegen. Zur Entfernung dieser ungelösten Feststoffanteile wird die Farbstofflösung vorteilhaft einer nochmaligen Ultrafiltration unterworfen. Als Permeat erhält man hier die von Feststoffen praktisch freie klare Farbstofflösung.

Zu dieser nochmaligen Ultrafiltration (Zwischenstufe) verwendet man wiederum bevorzugt eine Zirkonoxidmembran mit einem Trennschnitt im Bereich von 5.000 bis 1 x $10^6$, insbesondere 10.000 bis 500.000. Es wird zweckmässigerweide unter einem Druck von 0,5 bis 10 bar gearbeitet.

Anstelle der Ultrafiltration kann in Abhängigkeit vom Feinheitsgrad der unlöslichen Bestandteile, eine Mikrofiltration durchgeführt werden, z.B. unter Verwendung von mikroporösen Metallrohren oder Polypropylenmembranen.

Andererseits kann man die vorgereinigte Farbstoffsuspension nach dem Verdünnen mit Wasser einer Mehrstufenultrafiltration (als zweites Membrantrennverfahren) unterwerfen, wobei zunächst mögliche unlösliche Bestandteile abgetrennt werden und dann durch Verwendung von Membranen mit fallenden Trennschnitten, z.B. 500.000 bis 50.000 oder bis 5000, die Entsalzung und Aufkonzentrierung der Farbstofflösungen durchführt.

Die so erhaltenen konzentrierten Farbstoffpräparate können dann in flüssige und feste Farbstoffformulierungen überführt werden.

Die anfallenden Permeate können - sofern sie noch Farbstoffanteile enthalten - durch eine nachgeschaltete Hyperfiltration weiter gereinigt werden. Die nach der Hyperfiltration anfallenden Konzentrate werden in der Regel in die Synthesesuspension des Rohfarbstoffs zurückgeführt.

Bei niedrigem Salzgehalt und geringer Verunreinigung durch Nebenprodukte kann die Synthesesuspension ohne eine erste Entsalzung gleich soweit verdünnt werden, dass der Farbstoff sich löst, anschliessend mittels Mikro- oder Ultrafiltration vom unlöslichen Anteil befreit und schliesslich mit Hilfe der Hyperfiltration entsalzt und aufkonzentriert werden.

Ferner kann anstelle der Hyperfiltration eine kombinierte Hyperfiltration und Dialyse, insbesondere die Donnan-Dialyse, durchgeführt werden. Eine derartige Kombination dieser Membrantrennverfahren ist dann von Vorteil, wenn die Herstellung lagerstabiler Farbstofflösungen beabsichtigt ist, der Farbstoff jedoch nur eine ungenügende Wasserlöslichkeit besitzt. Da die Löslichkeitseigenschaften anionischer, wie auch kationischer Farbstoffe, stark von dem entsprechenden farblosen Gegenion abhängen, kann hier durch einen Ionenaustausch mittels Donnan-Dialyse der zuvor schwerlösliche Farbstoff auf einfache Art und Weise in ein gut wasserlösliches Farbstoffsalz überführt werden (siehe EP-A-0097 125 sowie EP-A-0 126 830).

Zur Herstellung konzentrierter Farbstoff- bzw. Aufhellerlösungen, die heute mehr und mehr als Flüssigmarken im Handel sind, benötigt man Farbstoff- bzw. Aufhellersalze mit einer guten Wasserlöslichkeit, denn nur so lässt sich der Lösungsmittelanteil in den Präparaten möglichst gering halten. Daneben ist aber auch bei der Herstellung fester Präparate eine hohe Löslichkeit des Farbstoffs oder Aufhellers von Vorteil, denn diese ermöglicht eine schonende und energiesparende Trocknung, da hochkonzentrierte Ausganslösungen eingesetzt werden können.

Das erfindungsgemässe Verfahren in seiner bevorzugten Ausgestaltung umfasst drei membrangebundene Trennoperationen und gliedert sich in die folgenden Einzelschritte:

- Ultrafiltration oder Mikrofiltrationen der wässrigen Dispersion oder Suspension des Rohfarbstoffs, zur Abtrennung der Hauptsalzmenge und dem Grossteil der Nebenprodukte;
- Verdünnen der Farbstoffsuspension oder -dispersion und Herstellen einer Farbstofflösung;
- Ultrafiltration der Farbstofflösung, zur Entfernung unlöslicher Bestandteile, die Farbstofflösung passiert als Permeat die Ultrafiltrationsmembran; das Konzentrat wird normalerweise in die wässrige Dispersion oder Suspension des Rohfarbstoffs zurückgeführt.
- Hyperfiltration der Farbstofflösung, wodurch der Restsalzgehalt der Lösung auf Werte unter 0,1 Gew.% gesenkt und die Farbstoffkonzentration auf 15 bis 30 Gew.% erhöht wird.

Im Rahmen einer rationellen Arbeitsweise erweist es sich als besonders vorteilhaft, die Farbstoffsynthese und die anschliessende Membranbehandlung kontinuierlich durchzuführen, d.h. die fortlaufend aus der Synthese kommende Farbstoffsuspension wird direkt in eine Kaskade der vorstehend im einzelnen erläuterten Membraneinheiten, samt Mischkammer zur Lösung des Farbstoffs geleitet und verlässt diese am Ende als gereinigte slazarme, konzentrierte Farbstofflösung, die direkt zu einem verkaufsfertigen flüssigen oder festen Handelsform weiterverarbeitet werden kann.

Zur Herstellung einer handelsfertigen Flüssigform ist die Farbstofflösung gegebenenfalls nach Zugabe von den, für Flüssigformulierungen üblichen Komponenten, wie schaumdämpfenden Mitteln, Gefrierschutzmitteln, Feuchthaltemitteln, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstofflösung kann aber auch, gegebenenfalls nach Zugabe von Zusätzen, wie Bindemitteln, Entstäubungsmitteln, Netzmitteln, Puffersubstanzen und/oder Coupagemitteln, durch Wasserentzug, in ein festen Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Die genannten Hilfsmittel können der Farbstofflösung natürlich nicht nur vor deren endgültiger Formulierung zugesetzt, sondern bereits vor oder während des Verfahrens in die Suspension oder Lösung des Rohfarbstoffs eingebracht werden. Eine Zugabe während des Verfahrens ist selbstverständlich nur dann sinnvoll, wenn das oder die Hilfsmittel nicht durch eines der Membrantrennverfahren wieder aus der Suspension oder Lösung entfernt werden.

Verwendung finden die Farbstoffpräparate zur Herstellung von Färbebädern, Klotzflotten oder Druckpasten, die sich je nach Farbstoff zum Färben und Bedrucken von natürlichen, wie auch synthetischen Fasermaterialien eignen, wie z.B. von Textilfasermaterialien aus Baumwolle, Wolle, Seide, Polyacrylnitril oder Polyamid oder auch von solchen Materialien aus Fasermischungen, wie z.B. aus Wolle/Polyamid, während die Aufhellerpräparate z.B. zum optischen Aufhellen von Textilmaterialien, Leder oder Papier verwendet werden.

Die folgenden Beispiele dienen der Erläuterung der Erfindung; Teile bedeuten Gewichtsteile und Prozente Gewichtsprozente. Der Membranflux ist angegeben in Liter Permeat pro $m^2$ Membranfläche und Tag[$1/m^2 \bullet d$].

Beispiel 1: 5.000 Teile Synthesesuspension des Reaktivfarbstoffs der Formel (als Natriumsalz)

(1) 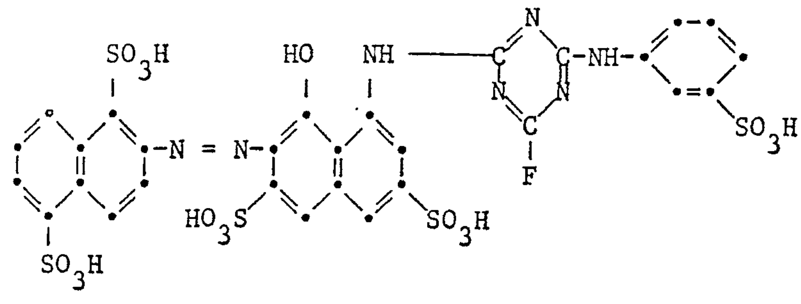

mit der Zusammensetzung
8,7% Farbstoff
4,1% Natriumchlorid
0,8% organische Nebenprodukte
86,4% Wasser
und einem pH von 5,6 werden zur Abtrennung von Nebenprodukten und der Hauptsalzmenge einer Ultrafiltration unterworfen. Man verwendet hierzu eine mikroporöse Zirkonoxidmembran in Rohrform (röhrenförmige Graphitmatrix, die auf der Innenseite mit Zirkonoxid beschichtet ist) mit einem molekularen Trennschnitt von 20.000. Durchgeführt wird die Ultrafiltration bei einem Druck von 4 bar, einer Strömungsgeschwindigkeit von 4 m/sec., einem Membranflux von 6 300 $l/m^2 \bullet d$ und einer Temperatur von 20 °C. Nach einer Betriebsdauer von 3 Stunden erhält man eine Farbstoffsuspension der folgenden Zusammensetzung:
15,6% Farbstoff
1,1% Natriumchlorid
0,3% organische Nebenprodukte
83,0% Wasser.

Anschliessend wird die Farbstoffsuspension mit der doppelten Menge an deionisiertem Wasser versetzt und in einem Intensivmischer kurz bei einer Temperatur von 28 °C aufgerührt. Der Farbstoff löst sich auf und man erhält eine trübe Lösung. Diese wird zur Abtrennung des ungelösten Anteils einer nochmaligen Ultrafiltration unterworfen, wiederum unter Verwendung einer Zirkonoxidmembran, deren Trennschnitt hier jedoch bei 40.000 liegt. Die Membran lässt die klare Farbstofflösung hindurchtreten, ungelöste Partikel werden zurückgehalten. Das klare Filtrat hat die folgende Zusammensetzung:
5,2% Farbstoff,
0,4% Natriumchlorid
0,1% organische Nebenprodukte

Das zurückbleibende feststoffhaltige Konzentrat wird der Suspension des Rohfarbstoffs zugeführt.

Die klare Farbstofflösung wird nun zur weiteren Entsalzung und Aufkonzentrierung einer Hyperfiltrationsanlage zugeleitet. Ausgerüstet ist diese Anlage mit einer modifizierten Polyacrylnitrilmembran; der Trennschnitt der Membran liegt bei ca. 500. Durchgeführt wird die Hyperfiltration bei einem Druck von 28 bar, einer Umwälzgeschwindigkeit von 12 l/min., einem Membranflux von 500 $l/m^2 \bullet d$ und einer Temperatur von 20 °C. Nach 4 Stunden erhält man eine aufkonzentrierte Farbstofflösung der folgenden Zusammensetzung:
22,6% Farbstoff
0,04% Natriumchlorid
0,15% organische Nebenprodukte.
77,2% Wasser

Die Farbstofflösung kann direkt standardisiert und zu einer flüssigen Handelsform oder einem festen Präparat weiterverarbeitet werden.

Zur Herstellung lagerstabiler flüssiger Handelsformen können z.B. 80 bis 90 Teile Farbstofflösung mit 10 bis 20 Teilen einer Natriumtripolyphosphatlösung als Puffersubstanz versetzt werden. Die gebrauchsfertigen Flüssigformulierungen haben einen pH-Wert von ca. 7,5 und sind während mehrerer Monate bei Lagertemperaturen von -10 °C bis +40 °C einwandfrei haltbar.

Anstelle des Reaktivfarbstoffes der Formel (1) kann man auch eine Synthesesuspension eines Direktfarbstoffes verwenden und erreicht analoge Resultate.

Beispiel 2: Die Synthesesuspension (5.000 Teile) des Reaktivfarbstoffs der Formel (als Natriumsalz)

(2)

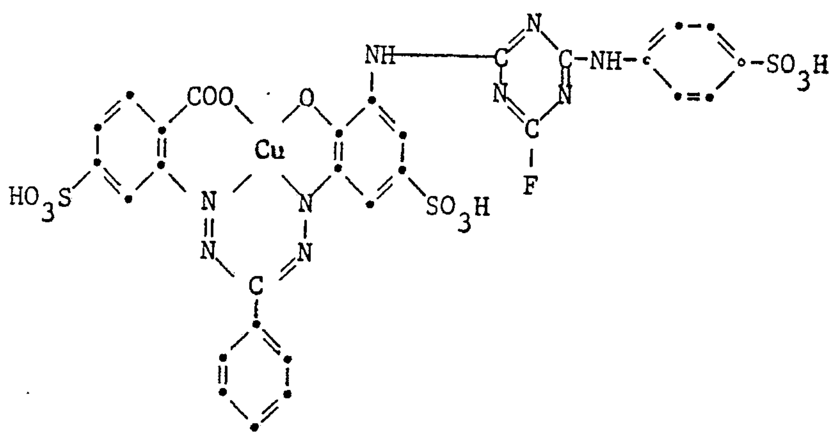

mit einem Farbstoffgehalt von 14%, einer Natriumchloridkonzentration von 7,2% und einem pH von 5 wird mit Hilfe der Mikrofiltration von der Hauptsalzmenge befreit. Durchgeführt wird die Mikrofiltration unter Verwendung poröser Edelstahlrohre mit einem Porendurchmesser von ca. 5 µm. Gearbeitet wird bei einem Druck von 2,5 bar, einer Temperatur von 18 °C und einer Strömungsgeschwindigkeit der Farbstoffsuspension von 5 m/sec. Die Permeatmenge beträgt 5300 $l/m^2 \bullet d$. Nach einer Betriebsdauer von 5 Stunden ist die Salzkonzentration auf 3,8% gesunken und der Farbstoffgehalt auf 28,5% gestiegen.

Anschliessend wird die Farbstofflösung mit Wasser auf etwa die Hälfte verdünnt und durchmischt, bis sich der Farbstoff gelöst hat. Die trübe Lösung wird dann durch Ultrafiltration von unlöslichen Bestandteilen befreit. Als Ultrafiltrationsmembran gelangt eine Zirkonoxidmembran (röhrenförmige Graphit-Matrix) mit einem Trennschnitt von 40.000 zur Anwendung. Die Membran lässt die klare Farbstofflösung hindurchtreten, ungelöste Teilchen werden zurückgehalten. Durchgeführt wird die Ultrafiltration bei einem Druck von 4 bar und einer Strömungsgeschwindigkeit von 4 m/sec. Die klärfiltrierte Farbstofflösung hat einen Salzgehalt von 2,3% und einen Farbstoffgehalt von 19%.

Die weitere Entsalzung und Aufkonzentrierung der Farbstofflösung erfolgt mittels Hyperfiltration an einer modifizierten Polyacrylnitrilmembran (anionisch modifiziert), deren Trennschnitt bei 500 bis 800 liegt. Die Farbstofflösung wird unter einem Druck von 25 bar und einer Umwälzgeschwindigkeit von 12 l/min. durch das Membranmodul gepumt. Der Membranflux beträgt 800 $l/m^2 \bullet d$. Nach einer Betriebsdauer von 7 Stunden ist der Salzgehalt auf einen Wert unter 0,1% gefallen; der Farbstoffgehalt der Lösung beträgt 24,6%. Die Farbstofflösung kann direkt standardisiert und zu einer flüssigen Handelsform oder einem festen Präparat weiterverarbeitet werden.

Wird die Synthesesuspension nach entsprechender Verdünnung direkt, ohne die Mikro- oder Ultrafiltrationsstufe zu durchlaufen, hyperfiltriert, dann findet man für den Membranflux eine wesentlich kleineren Wert von nur ca. 400 $l/m^2 \bullet d$, d.h. man benötigt mehr Zeit, um den gleichen Entsalzungsgrad und den geforderten Endfarbstoffgehalt zu erreichen.

Beispiel 3: Die Synthesesuspension (5.000 Teile) des Metallkomplexfarbstoffs der Formel (als Natriumsalz)

(3)

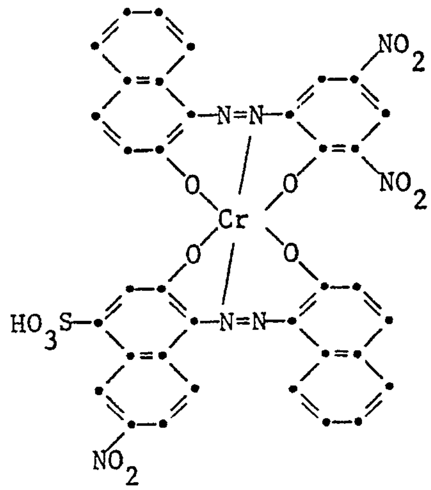

mit der Zusammensetzung
6,2% Farbstoff
12,6% Natriumchlorid
2,1% organische Nebenprodukte
79,1% Wasser
wird zunächst mittels Ultrafiltration von der Hauptsalzmenge und den Nebenprodukten befreit. Zur Ultrafiltration verwendet man eine mikroporöse Zirkonoxidmembran oder eine mikroporöse Keramikmembran, deren Trennschnitt im Bereich von ca. 20.000 liegt. Gearbeitet wird bei einer Temperatur von ca. 20 °C; der Membranflux beträgt 3000 l/m$^2$•d. Nach 8 Stunden ist die Synthesesuspension praktisch frei von organischen Nebenprodukten, und der Salzgehalt ist auf etwa ein Zehntel der ursprünglich vorhandenen Menge gesunken, während der Farbstoffgehalt der Suspension auf ca. 20% gestiegen ist. Vor der anschliessenden Hyperfiltration wird die Farbstoffsuspension auf einen Farbstoffgehalt von 9,8% verdünnt, wobei ein Teil des Farbstoffs in Lösung geht. Durchgeführt wird die Hyperfiltration wie im Beispiel 1 beschrieben; der Membranflux beträgt 800 l/m$^2$•d. Nach 1,5 Stunden erhält man eine salzarme Farbstoffsuspension mit einem Farbstoffgehalt von 30,1%. Die konzentrierte Suspension kann nach Zusatz von Coupagemitteln und gegebenenfalls eines Haftmittels, Tensids und staubbindender Zusätze durch Sprühtrocknen in ein verkaufsfertiges Farbstoffgranulat übergeführt werden.

Beispiel 4: Die salzhaltige Synthesesuspension (5.000 Teile) des kationischen Farbstoffs der Formel (als Sulfat)

(4)

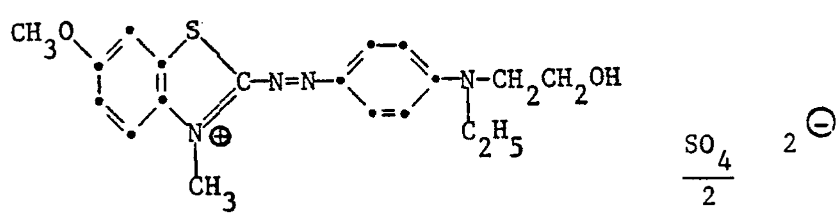

mit der Zusammensetzung
20,3% Farbstoff
6,8% Natriumsulfat
0,9% Natriumchlorid
0,8% organische Nebenprodukte
71,2% Wasser
wird mit Hilfe der Ultrafiltration zunächst vom Natriumsulfat befreit, wobei das Permeat, um ein Auflösen des Farbstoffs zu verhindern, laufend durch eine verdünnte Natriumchloridlösung ersetzt wird. Auf diese Weise wird das Natriumsulfat nahezu vollständig aus der Farbstoffsuspension herausgewaschen. Endgehalt nach 6 Stunden Betriebsdauer: Natriumsulfat 0,9%; organische Nebenprodukte weniger als 0,2%. Durchgeführt wird die Ultrafiltration unter Verwendung von Graphitrohren, deren Innenseite mit Zirkonoxid, Siliciumoxid oder Aluminiumoxid beschichtet ist (Trennschnitt ca. 5.000 bis 50.000); der Membranflux beträgt 4000 l/m2•d. Der Farbstoffgehalt erhöht sich während der Ultrafiltration nur geringfügig auf 22,4%. Die eigentliche Konzentrierung erfolgt auch hier mittels Hyperfiltration. Dazu wird die Farbstoffsuspension zunächst auf ca. die Hälfte verdünnt, wodurch sich der Farbstoff praktisch vollständig auflöst. Die Hyperfiltration wird wie im Beispiel 1 beschrieben durchgeführt (Membranflux: 500 l/m2•d) und liefert nach 6 Stunden eine konzentrierte Lösung mit einem Farbstoffgehlat von 43,2%. Ein Teil des Farbstoffs ist während der Hyperfiltration wieder ausgefallen und liegt in suspendierter Form vor.

Beispiel 5: Die Synthesesuspension (5000 Teile) des optischen Aufhellers der Formel (als Natriumsalz)

(5) 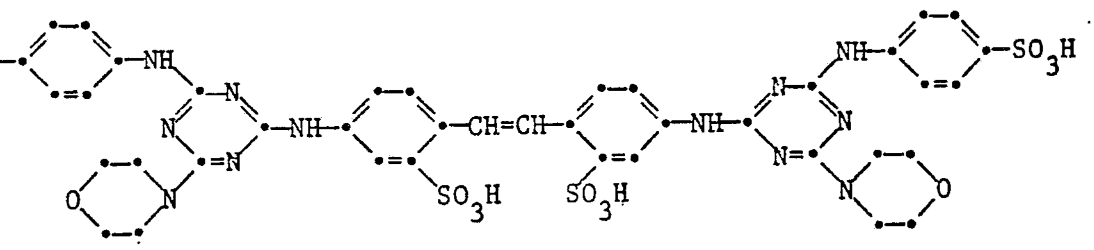

mit der Zusammensetzung
13,1% optischer Aufheller
5,3% Natriumchlorid
2,1% organische Nebenprodukte
79,5% Wasser
wird zur Abtrennung von Nebenprodukten und dem aus der Synthese stammenden Natriumchlorid einer Ultrafiltration unterworfen. Als Membran verwendet man eine Zirkonoxidmembran, wobei gleich gute Ergebnisse auch mit einer Polyacrylnitril-, Celluloseacetat- oder Polysulfonmembran erzielt werden. Der molekulare Trennschnitt der verwendeten Membranen liegt im Bereich von 5.000 bis 500.000. Gearbeitet wird mit einem Membranflux von ca. 5.000 $l/m^2$•d. Nach einer Betriebsdauer von 5 Stunden weist die Aufhellersuspension die folgende Zusammensetzung auf:
25,0% optischer Aufheller
0,9% Natriumchlorid
0,2% organische Nebenprodukte
73,9% Wasser

Ohne zu Verdünnen wird die Aufhellersuspension gleich anschliessend der Hyperfiltrationsanlage zugeführt. Hier erfolgt innerhalb von 1,5 Stunden eine weitere Aufkonzentrierung. Der Gehalt an optischem Aufheller liegt schliesslich bei 40 %. Durchgeführt wird die Hyperfiltration wie im Beispiel 1 beschrieben. Der Membranflux beträgt 500 $l/m^2$•d. Anstelle einer modifizierten Polyacrylnitrilmembran kann mit gleich gutem Ergebnis, d.h. bei gleicher Konzentrierungsleistung, auch eine modifizierte Polysulfonmembran verwendet werden, deren molekularer Trennschnitt ebenfalls im Bereich von 400 bis 800 liegt.

Die Aufhellersuspension kann durch Sprühtrocknen auf einem Düsenzerstäubungstrockner (Lufteintrittstemperatur ca. 300° C, Luftaustrittstemperatur ca. 120° C) zu einem freifliessenden Granulat verarbeitet werden. Aufgrund des hohen Trockensubstanzgehalts im Sprühslurry wird deutlich weniger Energie benötigt, als beim Sprühtrocknen verdünnter Aufhellersuspensionen oder -lösungen.

## Patentansprüche

1. Verfahren zur Herstellung von Präparaten wasserlöslicher organischer Farbstoffe ausgehend von einer wässrigen salzhaltigen Suspension des Rohfarbstoffs und unter Anwendung von Membrantrennverfahren, dadurch gekennzeichnet, dass man die wässrige Suspension des Rohfarbstoffs durch eine Fein- oder Mikrofiltration oder eine Ultrafiltration als erstem Membrantrennverfahren weitgehend von Nebenprodukten befreit und deren Salzgehalt um mehr als die Hälfte verringert, anschliessend die Farbstoffsuspension gegebenenfalls mit Wasser verdünnt und durch eine Hyperfiltration oder eine mehrstufige Ultrafiltration unter Verwendung von Membranen mit fallenden Trennschnitten als zweitem Membrantrennverfahren entsalzt und aufkonzentriert und dann in eine flüssige oder feste Handelsform überführt.

2. Verfahren nach Anspruch 1, dadurch gekennzeichnet, dass das erste Membrantrennverfahren aus einer Ultrafiltration besteht unter Verwendung einer Membran aus porösem Glas, Keramik, Stahl, aus mit

Zirkonoxid beschichtetem porösem Kohlenstoff oder aus Polyacrylnitrilen, Celluloseacetaten oder Polysulfonen.

3. Verfahren nach Anspruch 2, dadurch gekennzeichnet, dass die Ultrafiltration unter Verwendung einer mit Zirkonoxid beschichteten porösen Kohlenstoffmembran mit einem Trennschnitt von 5.000 bis 500.000 durchgeführt wird.

4. Verfahren nach Anspruch 1, dadurch gekennzeichnet, dass das erste Membrantrennverfahren aus einer Mikrofiltration unter Verwendung eines Metallfilters mit einer Porengrösse von 0,2 bis 40 µm besteht.

5. Verfahren nach den Ansprüchen 1 bis 3, dadurch gekennzeichnet, dass man die Ultrafiltration bei einem Unterdruck von 200 bis 20 mbar durchführt und gegebenenfalls auf seiten der Farbstoffsuspension gleichzeitig einen Druck von 0,5 bis 10 bar anwendet.

6. Verfahren nach Anspruch 1, dadurch gekennzeichnet, dass man die Hyperfiltration mittels einer anionisch modifizierten Polyacrylnitril-, Polysulfon- oder Celluloseacetat-Membran mit einem Trennschnitt von 400 bis 800 durchführt.

7. Verfahren nach Anspruch 1, dadurch gekennzeichnet, dass man den Farbstoff vor Durchführen des zweiten Membrantrennverfahrens durch Verdünnen der Farbstoffsuspension in Lösung bringt.

8. Verfahren nach Anspruch 7, dadurch gekennzeichnet, dass man die Farbstofflösung vor Durchführen des zweiten Membrantrennverfahrens mittels Ultrafiltration von unlöslichen Anteilen befreit.

9. Verfahren nach Anspruch 1, dadurch gekennzeichnet, dass die Rohfarbstoffsuspension im ersten Membrantrennverfahren einer Ultra- oder Mikrofiltration unterworfen wird, die so erhaltene Farbstoffsuspension durch Verdünnen mit Wasser in eine Farbstofflösung übergeführt wird, die dann zur Entfernung unlöslicher Anteile einer Ultrafiltration unterworfen und schliesslich mittels Hyperfiltration entsalzt und aufkonzentriert wird.

10. Verfahren nach Anspruch 1, dadurch gekennzeichnet, dass die Rohfarbstoffsuspension im ersten Membrantrennverfahren einer Ultra- oder Mikrofiltration unterworfen wird, die so erhaltene Farbstoffsuspension durch Verdünnen mit Wasser in eine Farbstofflösung übergeführt wird, die dann zur Entfernung unlöslicher Anteile sowie zur Entsalzung und Aufkonzentrierung einer mehrstufigen Ultrafiltration als zweiten Membrantrennverfahren unter Verwendung von Membranen mit fallenden Trennschnitten unterworfen wird, das erhaltene Konzentrat in eine feste oder flüssige Farbstoffhandelsform übergeführt und das Permeat einer Hyperfiltration unterworfen wird, wobei das nach der Hyperfiltration erhaltene Konzentrat in die Rohfarbstoffsuspension zurückgeführt wird.

11. Verfahren nach den Ansprüchen 1 bis 10, dadurch gekennzeichnet, dass man die wässrige Suspension eines Reaktivfarbstoffes reinigt, entsalzt und aufkonzentriert und in eine feste oder flüssige Handelsform überführt.

## Claims

1. A process for the preparation of formulations of water-soluble organic dyes starting from an aqueous salt-containing suspension of the untreated dye and using membrane separation methods, which process comprises substantially freeing the aqueous suspension of the untreated dye from by-products and reducing the salt concentration thereof by more than half by a fine filtration or microfiltration or an ultrafiltration as first membrane separation method, then, if necessary, diluting the dye suspension with water and effecting desalting and concentration by a hyperfiltration or a multi-step ultrafiltration using membranes having decreasing cut-off levels as second membrane separation method and then converting the product into a liquid or solid commercial formulation.

2. A process according to claim 1, wherein the first membrane separation method consists of an ultrafiltration using a membrane made of porous glass, ceramic, steel, zirconium oxide-coated porous carbon, or of polyacrylonitriles, cellulose acetates or polysulfones.

3. A process according to claim 2, wherein the ultrafiltration is carried out using a zirconium oxide-coated porous carbon membrane having a cut-off level in the range from 5,000 to 500,000.

4. A process according to claim 1, wherein the first membrane separation process consists of a microfiltration using a metal filter having a pore size of 0.2 to 40 µm.

5. A process according to any one of claims 1 to 3, wherein the ultrafiltration is carried out under a vacuum of 200 to 20 mbar and, if necessary, simultaneously applying a pressure of 0.5 to 10 bar to the dye suspension.

6. A process according to claim 1, wherein the hyperfiltration is carried out with an anionically modified polyacrylonitrile, polysulfone or cellulose acetate membrane with a cut-off level in the range from 400 to 800.

7. A process according to claim 1, wherein the dye is dissolved by diluting the dye suspension before carrying out the second membrane separation method.

8. A process according to claim 7, wherein the dye solution is freed from insoluble constituents by ultrafiltration before carrying out the second membrane separation method.

9. A process according to claim 1, which comprises subjecting the suspension of the untreated dye to an ultra- or microfiltration in the first membrane separation method and converting the resultant dye suspension by dilution with water into a dye solution which is then subjected to an ultrafiltration to remove insoluble constituents and finally desalted and concentrated by hyperfiltration.

10. A process according to claim 1, which comprises subjecting the suspension of the untreated dye to an ultra- or microfiltration in the first membrane separation method, converting the dye suspension so obtained into a dye solution by dilution with water, then subjecting said solution to a multi-step ultrafiltration as second membrane separation method using membranes with decreasing cut-off levels to remove insoluble constituents and salts and to effect concentration, converting the concentrate so obtained into a solid or liquid commercial formulation and subjecting the permeate to a hyperfiltration, the concentrate obtained after the hyperfiltration being recycled to the suspension of the untreated dye.

11. A process according to any one of claims 1 to 10, which comprises purifying, desalting and concentrating an aqueous suspension of a reactive dye and converting the concentrate into a solid or liquid commercial formulation.

**Revendications**

1. Procédé de fabrication de préparations de colorants organiques hydrosolubles à partir d'une suspension aqueuse saline du colorant brut, mettant en oeuvre des séparations par membrane, caractérisé en ce que l'on débarrasse dans une grande mesure la suspension aqueuse du colorant brut d'avec les produits secondaires et réduit sa teneur en sel de plus de moitié, par filtration fine ou microfiltration ou ultrafiltration, comme première séparation par membrane, puis dilue éventuellement la suspension de colorant avec de l'eau et la déminéralise et la concentre par une hyperfiltration ou par une ultrafiltration en plusieurs stades en utilisant des membranes à limites d'exclusion décroissantes, comme deuxième séparation par membrane, puis la transforme en une formulation commerciale liquide ou solide.

2. Procédé selon la revendication 1, caractérisé en ce que la première séparation par membrane consiste en une ultrafiltration mettant en oeuvre une membrane en verre, céramique ou acier poreux, ou en carbone poreux recouvert d'oxyde de zirconium, ou encore en polyacrylonitrile, acétate de cellulose ou polysulfone.

3. Procédé selon la revendication 2, caractérisé en ce que l'ultrafiltration est réalisée a l'aide d'une membrane en carbone poreux recouvert d'oxyde de zirconium, ayant une limite d'exclusion de 5000 à 500000.

4. Procédé selon la revendication 1, caractérisé en ce que le premier processus de séparation par

membrane consiste en une microfiltration mettant en oeuvre un filtre métallique ayant une taille de pores de 0,2 à 40 µm.

5. Procédé selon les revendications 1 à 3, caractérisé en ce que l'ultrafiltration est réalisée sous une dépression de 200 a 20 mbar, avec, éventuellement, application simultanée d'une pression de 0,5 à 10 bar du côté de la suspension de colorant.

6. Procédé selon la revendication 1, caractérisé en ce qu'on réalise l'hyperfiltration au moyen d'une membrane en polyacrylonitrile, polysulfone ou acétate de cellulose, à modification anionique et ayant une limite d'exclusion de 400 à 800.

7. Procédé selon la revendication 1, caractérisé en ce que l'on solubilise le colorant, par dilution de la suspension du colorant, avant de réaliser la deuxième séparation par membrane.

8. Procédé selon la revendication 7, caractérisé en ce que l'on débarrasse par ultrafiltration la solution du colorant des parties insolubles, avant de réaliser la deuxième séparation par membrane.

9. Procédé selon la revendication 1, caractérisé en ce que l'on soumet la suspension de colorant brut à une ultra-ou microfiltration au cours de la première séparation par membrane, on transforme, par dilution avec de l'eau, la suspension de colorant ainsi obtenue en une solution de colorant, laquelle est ensuite soumise à une ultrafiltration pour éliminer les parties insolubles, puis finalement déminéralisée et concentrée par hyperfiltration.

10. Procédé selon la revendication 1, caractérisé en ce que l'on soumet la suspension de colorant brut à une ultra- ou microfiltration au cours de la première séparation par membrane, on transforme, par dilution avec de l'eau, la suspension de colorant ainsi obtenue en une solution de colorant, laquelle est ensuite soumise à une ultrafiltration en plusieurs stades, à l'aide de membranes à limites d'exclusion décroissantes, comme deuxième séparation par membrane, pour éliminer les parties insolubles ainsi que pour déminéraliser et concentrer, on transforme le concentré obtenu en une formulation commerciale de colorant solide ou liquide, et on soumet le perméat à une hyperfiltration, le concentré obtenu par hyperfiltration étant alors recyclé dans la suspension de colorant brut.

11. Procédé selon les revendications 1 à 10, caractérisé en ce que l'on purifie, déminéralise et concentre la suspension aqueuse d'un colorant réactif, et la transforme en une formulation commerciale solide ou liquide.